# EUROPÄISCHE PATENTSCHRIFT

(11) **EP 2 369 072 B1**
(45) Veröffentlichungstag und Bekanntmachung des Hinweises auf die Patenterteilung: **19.07.2017**
(21) Anmeldenummer: 11160004.5
(22) Anmeldetag: 28.03.2011
(51) Int. Cl.: B01D 29/64, B01D 29/03, E03F 5/14

(54) **Reinigungsvorrichtung und Reinigungsverfahren zur Reinigung von Gewässern sowie technische Anlage mit solcher Reinigungsvorrichtung**
Cleaning device and method for cleaning bodies of water and technical assembly with such a cleaning device
Dispositif et procédé de nettoyage pour le nettoyage d'eaux et installation technique dotée d'un tel dispositif de nettoyage

(30) Priorität: 26.03.2010 DE 102010013186
(43) Veröffentlichungstag der Anmeldung: 28.09.2011
(73) Patentinhaber: Schweiger, Johann, 93199 Zell (DE)
(72) Erfinder: Schweiger, Johann, 93199 Zell (DE)
(74) Vertreter: Bittner, Bernhard

(56) Entgegenhaltungen:
- EP-A1- 0 564 870
- DE-A1- 4 404 976
- US-A- 5 840 180

## Beschreibung

Die Erfindung bezieht sich auf eine Reinigungsvorrichtung und ein Reinigungsverfahren zur Reinigung von Gewässer sowie eine technische Anlage mit einer solchen Reinigungsvorrichtung, und insbesondere auf eine Reinigungsvorrichtung und ein Reinigungsverfahren zur Vorreinigung von Gewässer, welches einer technischen Anlage, wie beispielsweise einer Wasserkraftanlage oder einer Kläranlage usw. zugeführt werden soll.

Zur Erzeugung von Strom mittels Wasserkraft wird Wasser eines Flusses, Baches oder eines Sees in eine Wasserkraftanlage eingeleitet. In dem Wasser sind regelmäßig Verunreinigungen bzw. Schwemmgut in Form von beispielsweise Blättern und/oder Ästen von Pflanzen, wie Bäumen, Sträuchern, Blumen, oder auch in Form von Abfallstoffen, die beispielsweise von Menschen oder Tieren in das Wasser eingebracht wurden usw. vorhanden. Solches Schwemmgut sammelt sich regelmäßig vor dem Zulauf von Wasserkraftanlagen in dem Fluss, Bach oder See. Wird das Schwemmgut nicht herausgefiltert, kann es zumindest den Zulauf zu der Wasserkraftanlage verstopfen oder sogar in die Wasserkraftanlage eindringen, was zu Beschädigungen an ihren Teilen führen kann. Ähnliches gilt auch für Kläranlagen.

Derzeit werden bei Kleinwasserkraftwerken, wie sie beispielsweise in Bächen im ländlichen Raum in Deutschland zur Nutzung der Strömungsgeschwindigkeit des Bachwassers zum Einsatz kommen, Schwemmgüter meist von Zeit zu Zeit von Hand bzw. mit einem Handrechen von dem Zulauf der Kleinwasserkraftwerke beseitigt. Dies ist mühsam und erfordert eine regelmäßige Kontrolle. Je nach Schwemmgutgehalt des Gewässers kann ein zumindest zeitweises Verstopfen des Zulaufs zu dem Kleinwasserkraftwerk nicht verhindert werden.

Außerdem sind beispielsweise aus der EP 0 564 870 A1 Schneckenfördereinrichtung zum Entfernen von festen Bestandteilen aus einer Flüssigkeit bekannt. Dazu ist vorgesehen, dass eine Schnecke im Inneren eines Gehäuses rotiert, wobei in einem unteren Bereich eine Außenwandung des Gehäuses zumindest abschnittsweise für die Flüssigkeit durchlässig ausgeführt ist. Oftmals ist eine Komprimierung der Feststoffe erwünscht, weshalb im oberen Bereich der Auswurf der abgetrennten Feststoffe reguliert werden kann, was dazu führt, dass die Feststoffe zumindest zeitweise dort verbleiben und durch die rotierende Schnecke komprimiert werden, wobei insbesondere Wasser aus diesen herausgepresst wird. Tiere, die in Schneckenfördereinrichtung werden oft während des Transports verletzt und beim Komprimieren getötet.

Es besteht daher der Bedarf nach einer Reinigungsvorrichtung zur Reinigung von Gewässer, mit welcher Schwemmgut in Form von beispielsweise Blättern und/oder Ästen von Pflanzen, wie Bäumen, Sträuchern, Blumen, oder auch sonstigen groben Abfallstoffen mit Partikelgrößen, die größer als ca. 1 mm sind, einfach und kostengünstig aus dem Gewässer gefiltert werden kann, um das Gewässer vorzureinigen, wobei jedoch im Gewässer befindliche Lebewesen geschont und möglichst nicht verletzt werden sollen.

Es ist daher Aufgabe der Erfindung, eine Reinigungsvorrichtung und ein Reinigungsverfahren zur Reinigung von Gewässer sowie eine technische Anlage mit einer solchen Reinigungsvorrichtung zur Verfügung zu stellen, welche sowohl eine hohe Reinigungsleistung für Partikel mit Größen von über ca. 1 mm erzielen als auch kostengünstig, wartungsarm, wenig störanfällig, und in hohem Maße ökologisch verträglich sind.

Die Aufgabe wird durch eine Reinigungsvorrichtung nach Patentanspruch 1 gelöst. Die Reinigungsvorrichtung dient zur Reinigung von Gewässer von Schwemmgut und umfasst eine Trenneinrichtung zum Trennen von Schwemmgut und Wasser des Gewässers, und eine Förderschnecke zum Fördern von an der Trenneinrichtung abgelagertem Schwemmgut aus dem Gewässer. Vorteilhaft lässt die Trenneinrichtung das Wasser passieren und hält das Schwemmgut zurück.

Vorteilhafte weitere Ausgestaltungen der Reinigungsvorrichtung sind in den abhängigen Patentansprüchen angegeben.

Vorzugsweise hat die Reinigungsvorrichtung zudem ein Gestell, an welchem die Förderschnecke gelagert ist, wobei die Trenneinrichtung wenigstens abschnittsweise und bevorzugt vollständig zwischen Gestell und Förderschnecke angeordnet ist.

Es ist vorteilhaft, wenn das Gestell die Trenneinrichtung als einen Wassereinlauf aufweist und zudem eine Öffnung als einen Wasserauslauf aus dem Gestell der Reinigungsvorrichtung hat, wobei die Öffnung für den Wasserauslauf der Summe der Trenneinrichtungsöffnungen entspricht.

Vorzugsweise umfasst die Reinigungsvorrichtung zudem eine Lagereinrichtung zur Lagerung der Förderschnecke an dem Gestell und/oder zum Abscheiden von Sand aus dem Gewässer.

Es ist möglich, dass die Trenneinrichtung zumindest teilweise um die Förderschnecke gebogen ist.

Die Reinigungsvorrichtung enthält auch eine Amphibienableiteinrichtung zum Ableiten von mit der Förderschnecke aus dem Gewässer geförderten Amphibien zurück in das Gewässer.

Darüber hinaus kann die Reinigungsvorrichtung zudem mit einer Schwemmgutaufnahmeeinrichtung zur Aufnahme von aus dem Gewässer gefördertem Schwemmgut und/oder einer Antriebseinrichtung zum Antrieb der Förderschnecke in eine Drehbewegung versehen sein. Es besteht die Möglichkeit, dass die Förderschnecke an der Unterseite ihrer Schneckenflügeln mit Eisbrechern versehen ist.

Die Aufgabe wird zudem durch eine technische Anlage nach Patentanspruch 10 gelöst. Die technische Anlage dient zur Verwendung von Wasser aus einem natürlichen Gewässer und umfasst eine Reinigungsvorrichtung wie zuvor beschrieben. Vorteilhaft handelt es sich um eine Anlage zur Erzeugung von elektrischer Energie.

Die Aufgabe wird zudem durch ein Reinigungsverfahren nach Patentanspruch 11 gelöst, welches zum Reinigen von Gewässer von Schwemmgut dient, und die Schritte umfasst: Trennen von Schwemmgut und Wasser des Gewässers mittels einer Trenneinrichtung, und Fördern von an der Trenneinrichtung abgelagertem Schwemmgut aus dem Gewässer mittels einer Förderschnecke und Ableiten von mit der Förderschnecke aus dem Gewässer geförderten Tieren mittels einer Amphibienableiteinrichtung zurück in das Gewässer, wobei das Fördern von an der Trenneinrichtung abgelagertem Schwemmgut aus dem Gewässer mittels einer Förderschnecke erfolgt, die zumindest abschnittsweise an deren der Trenneinrichtung zugewandten Begrenzung eine Schutzeinrichtung aufweist, welche ein schmaler Schutzstreifen ist, der an der radial außenliegenden Begrenzung der Förderschnecke angeordnet ist und verhindert, dass Tiere wie Amphibien oder kleine Fische teilweise durch die Trenneinrichtungsöffnungen hindurchtreten.

Mit der zuvor beschriebenen Reinigungsvorrichtung kann, insbesondere durch die Bauweise der Förderschnecke mit Trenneinrichtung als Rechen, mit einfacher Technik auf geringem Platz im Bereich der genannten Partikelgrößen eine hohe Reinigungsleistung erzielt werden, da der Rechenprozess dank der Schneckenwindungen kontinuierlich betrieben werden kann.

Desweiteren kann auf hydraulische Antriebe verzichtet werden, die bei Temperaturen im Bereich der Frostgrenze ihres Hydraulikfluids langsamer laufen. Ferner sind auch Klapp- und Wackelmechaniken sowie störanfällige Seil- und Kettentechnik unnötig. Alles in allem hat die Reinigungsvorrichtung also basierend auf wenigen ausgereiften Komponenten eine einfache Bauweise, so dass die Reinigungsvorrichtung wenig störanfällig ist.

Insgesamt treten bei der Reinigungsvorrichtung und dem Reinigungsverfahren nur geringe Kräfte auf, so dass die Reinigungsvorrichtung und das Reinigungsverfahren mit nur sehr wenig Energieaufwand betrieben werden können.

Da die Reinigungsvorrichtung nur vergleichsweise wenige Komponenten aufweist, kann die Reinigungsvorrichtung mit relativ geringem Kostenaufwand hergestellt werden, ist relativ wartungsarm und kann mit ökologisch unbedenklichen Betriebsmitteln betrieben werden.

Die Reinigungsvorrichtung und das Reinigungsverfahren sind besonders interessant bei Gewässern mit geringer Fließgeschwindigkeit bzw. geringem Durchfluss, jedoch gleichzeitig hoher Schmutzdichte. Eine solche Situation ist beispielsweise bei stark bewachsenen Auwaldufern von kleinen und mittleren Bächen vorzufinden, wenn sich im Gewässer Laub angesammelt hat.

Darüber hinaus bietet sich die Reinigungsvorrichtung auch für Gegenden an, in welchen das Gewässer vereist. Aufgrund der von der Reinigungsvorrichtung ausgeführten Drehbewegung kann sich die Reinigungsvorrichtung nämlich selbst von Sulzeis oder Vereisung freihalten.

Nachfolgend wird die Erfindung unter Bezugnahme auf die beiliegende Zeichnung und anhand von Ausführungsbeispielen näher beschrieben. Es zeigen:
Fig. 1 eine schematische Ansicht einer Reinigungsvorrichtung für eine technische Anlage gemäß einem Ausführungsbeispiel der vorliegenden Erfindung; und
Fig. 2 eine schematische Draufsicht auf die Reinigungsvorrichtung von Fig. 1, welche in einem Fließgewässer angeordnet ist.

### (Ausführungsbeispiel)

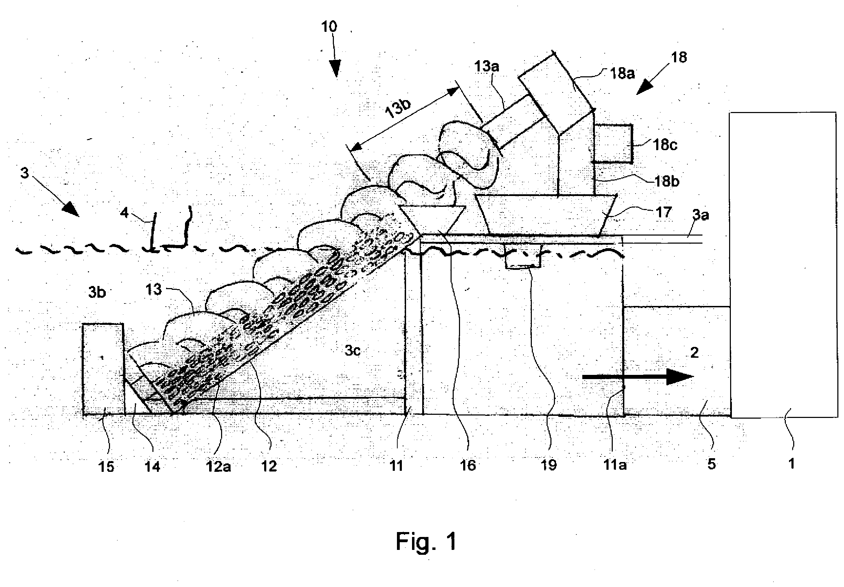

Fig. 1 zeigt schematisch eine technische Anlage 1 zur Verwendung von Wasser 2 aus einem natürlichen Gewässer 3, wie beispielsweise einem Fluss, einem Bach, einem See, usw. Die technische Anlage 1 kann beispielsweise ein Wasserkraftwerk, insbesondere Fließgewässerkraftwerk, welches eine Stromerzeugungsvorrichtung zur Erzeugung von Strom aus Wasserkraft umfasst, oder eine Kläranlage oder auch ein Kraftwerk sein, welches Wasser aus dem natürlichen Gewässer 3 in einem Kühlkreislauf verwendet.

Das Wasser 2 wird durch Trennen von in Fig. 1 schematisch dargestelltem Schwemmgut 4 aus dem natürlichen Gewässer 3 mittels einer Reinigungsvorrichtung 10 erlangt, die vor dem Zulauf des Wassers 2 zu der technischen Anlage 1 in dem Gewässer 3 angeordnet ist. Das Wasser läuft also in Richtung des dicken schwarzen Pfeils in Fig. 1 in die technische Anlage 1. Das Wasser 2 wird der technischen Anlage 1 über eine Zuführeinrichtung 5 zugeführt, welche beispielsweise ein Rohr, ein offener oder geschlossener Kanal usw., sein kann.

Die Reinigungsvorrichtung 10 umfasst ein Gestell 11, eine Trenneinrichtung 12, eine Förderschnecke 13, die mit einem Lager 14 gelagert ist, einen Lagerbock 15, eine Amphibienableiteinrichtung 16, eine Schwemmgutaufnahmeeinrichtung 17, eine Antriebseinrichtung 18 und eine Wasserstandserfassungseinrichtung 19.

Das Gestell 11 ist in Fig. 1 in das Gewässer 3 eingebracht und dient zur Aufnahme der anderen Komponenten der Reinigungsvorrichtung 10. Ein Teil des Gestells 11 ist vorzugsweise oberhalb einer Stauhöhe bzw. Wasserlinie 3a des Gewässers 3 angeordnet, so dass daran die Amphibienableiteinrichtung 16, die Schwemmgutaufnahmeeinrichtung 17, die Antriebseinrichtung 18 und die Wasserstandserfassungseinrichtung 19 vorgesehen, insbesondere befestigt, sein können, wie später ausführlicher beschrieben.

Die Trenneinrichtung 12 hat in Fig. 1 eine Vielzahl von als Langlöcher ausgeführten Trenneinrichtungsöffnungen 12a, durch welche Wasser des Gewässers 3 fließen kann. Die Trenneinrichtungsöffnungen 12a sind jedoch für Schwemmgut 4 undurchlässig.

Die Trenneinrichtung 12 ist in Fig. 1 als Trog, insbesondere als Siebtrog, ausgeführt, welcher teilweise um die Förderschnecke 13 gelegt ist. Die Förderschnecke 13 ist vorzugsweise als archimedische Förderschnecke ausgebildet. Das heißt, die Förderschnecke 13 hat eine Vielzahl von Förderwindungen in Form einer Schneckenwindung bzw. von Schneckenflügeln, die schraubenförmig um eine langgestreckte Förderschneckenachse 13a herum angeordnet sind.

Genauer gesagt, die Trenneinrichtung 12 ist derart um die Förderschnecke 13 gebogen, dass der Außenradius der Förderschnecke 13 geringfügig kleiner als der Radius des von der Trenneinrichtung 12 gebildeten Bogens ist. Noch genauer, die Trenneinrichtung 12 bildet im Wesentlichen eine Teilfläche eines Hohlzylinders, dessen Zentrumsachse mit dem Zentrum der Förderschneckenachse 13a zusammen fällt. Auf diese Weise kann sich die Förderschnecke 13 um die Förderschneckenachse 13a jeweils an der Trenneinrichtung 12 vorbei drehen. Dadurch kann an der Trenneinrichtung 12 abgelagertes Schwemmgut 4 in die Schneckenwindungen der Förderschnecke 13 aufgenommen werden und entlang der Trenneinrichtung 12 transportiert werden, wenn sich die Förderschnecke 13 um ihre Förderschneckenachse 13a dreht.

In Fig. 1 ist die Trenneinrichtung 12 als langgestreckte Platte dargestellt, deren Länge im Wesentlichen parallel zu der Förderschnecke 13 angeordnet ist, und deren Breite als Bogen gebogen ist, so dass der Radius des Bogens geeignet größer als der Außenradius der Förderschnecke 13 ist. Die Trenneinrichtung 12 ist an dem im Wesentlichen L-förmigen Gestell 11 befestigt, so dass die Trenneinrichtung 12 und das Gestell 11 im Wesentlichen ein Dreieck, und insbesondere ein rechtwinkliges Dreieck, bilden. Das heißt, die Trenneinrichtung 12 bildet die Hypotenuse in einem mit dem Gestell 11 gebildeten rechtwinkligen Dreieck. Da die Förderschnecke 13 mittels der Lagerung durch das Lager 14 an der Trenneinrichtung 12 angeordnet ist, wie zuvor beschrieben, bildet auch ein Teil der Förderschnecke 13 und das Gestell 11 ein Dreieck, bzw. ein Teil der Förderschnecke 13 bildet die Hypotenuse in einem mit dem Gestell 11 gebildeten rechtwinkligen Dreieck. Auf diese Weise sind die Trenneinrichtung 12 und die Förderschnecke 13 in dem Gewässer 3 in der Gewässerströmungsrichtung schräg nach oben ansteigend angeordnet. Die Gewässerströmungsrichtung ist in Fig. 1 mit einem dicken schwarzen Pfeil bei dem Übergang zwischen Gestell und Zuführeinrichtung 5 dargestellt.

Wie aus Fig. 1 ersichtlich, ist die Trenneinrichtung 12 zwischen Gestell 11 und Förderschnecke 13 angeordnet. Die Trenneinrichtung 12 teilt durch ihre Anordnung in der Reinigungsvorrichtung 10 das Gewässer 3 in Oberwasser 3b und Unterwasser 3c. Das heißt, das Oberwasser 3b ist in Fig. 1 oberhalb der Trenneinrichtung 12 angeordnet und ist noch ungereinigt. Das Unterwasser 3c ist in Fig. 1 unterhalb der Trenneinrichtung 12 angeordnet und somit mittels der Trenneinrichtung 12 von Schwemmgut 4 gereinigt. Ein Teil des Unterwassers 3c oder auch das gesamte Unterwasser 3c wird über die Zuführeinrichtung 5 in die technische Anlage 1 geführt. Wie aus Fig. 1 ersichtlich, ist der der Trenneinrichtung 12 abgewandte Teil der Förderschnecke 13 unterhalb der Wasserlinie 3a vollständig von Oberwasser 3b umgeben.

Somit weist das Gestell 11 die Trenneinrichtung 12 als einen Wassereinlauf auf und hat eine Öffnung 11a als einen Wasserauslauf, an welche die Zuführeinrichtung 5 angeschlossen ist. Vorzugsweise entspricht die Öffnung 11a für den Wasserauslauf der Summe der Trenneinrichtungsöffnungen 12a. Es ist auch vorteilhaft, wenn die Querschnittsfläche der Öffnung 11 a für den Wasserauslauf im Wesentlichen senkrecht zu der Strömungsrichtung des Gewässers 3 angeordnet ist.

Die Förderschnecke 13 ist in Fig. 1 länger als die Trenneinrichtung 12. Hierbei überragt die Förderschnecke 13 die Trenneinrichtung 12 an einer Seite, welche in Fig. 1 oben angeordnet ist. Ein Teil der Förderschnecke 13, welcher die Trenneinrichtung 12 überragt, ist auch als Förderschneckenauslauf 13b bezeichnet. Bei, und vorzugsweise unter, dem Förderschneckenauslauf 13b ist eine Amphibienableiteinrichtung 16 angeordnet, die als Rinne bzw. Rutsche ausgebildet ist, über welche amphibische Lebewesen, die in die Förderschnecke 13 geraten sind, in das Unterwasser 3c abgeleitet werden können. Hierzu ist der Förderschneckenauslauf 13b amphibisch angepasst. Dies bedeutet, dass die Förderschneckenwindung im Bereich des Förderschneckenauslaufs 13b derart gestaltet ist, dass sich amphibische Lebewesen nicht daran verletzen können. Zudem ist es möglich, durch die Förderschnecke 13 Wasser mitzuführen, um die Amphibienableiteinrichtung 16 mit Wasser zu versorgen, so dass hierfür keine zusätzliche Pumpe erforderlich ist. Sollte kein Bedarf bestehen, amphibische Lebewesen aus der Förderschnecke 13 abzuleiten, können die amphibische Anpassung des Förderschneckenauslaufs 13b und die Amphibienableiteinrichtung 16 weggelassen werden.

Rechts neben der Amphibienableiteinrichtung 16 ist in Fig. 1 eine Schwemmgutaufnahmeeinrichtung 17 angeordnet, in welche von der Trenneinrichtung 12 aus dem Gewässer 3 getrenntes und von der Förderschnecke 13 aus dem Gewässer 3 über die Wasserlinie 3a gefördertes Schwemmgut 4 aufgenommen werden kann.

Die Förderschnecke 13 ist außerdem an ihrem die Trenneinrichtung 12 überragenden Teil in einem Widerlager in der Antriebseinrichtung 18 gelagert. Die Antriebseinrichtung 18 weist einen Motor 18a zum Antrieb der Förderschnecke 13 in eine Drehbewegung um ihre Förderschneckenachse 13a, einen Motorbock 18b zur Lagerung des Motors 18a und einen Schaltkasten 18c auf, in welchem elektrische Komponenten zur Ansteuerung der Antriebseinrichtung 18 vorgesehen sind.

Wird die Förderschnecke 13 durch die Antriebseinrichtung 18 in eine Drehbewegung um ihre Förderschneckenachse 13a angetrieben, kann, durch die Lagerung der Förderschnecke 13 in dem Lager 14 und dem Widerlager in der Antriebseinrichtung 18 derart, dass die Förderschnecke 13 schräg ansteigend in dem Gewässer 3 bzw. seiner Gewässerströmung angeordnet ist, wie in Fig. 1 gezeigt, Schwemmgut 4, welches das Oberwasser 3b an die Trenneinrichtung 12 schwemmt, entlang der durch die Trenneinrichtung 12 gebildeten Trogwand nach oben gefördert und in die Schwemmgutaufnahmeeinrichtung 17 entsorgt werden.

Mittels der Wasserstanderfassungseinrichtung 19 wird der Wasserstand in der Reinigungsvorrichtung 10 erfasst. Hierzu ist die Wasserstanderfassungseinrichtung 19 so an dem Gestell 11 montiert, dass die Wasserstanderfassungseinrichtung 19 den Wasserstand des Unterwassers 3c in der Reinigungsvorrichtung 10 erfassen kann. Je nach Ergebnis der Erfassung durch die Wasserstanderfassungseinrichtung 19 wird die Reinigungsvorrichtung 10 betrieben oder nicht. Hierbei ist es vorteilhaft, wenn die Reinigungsvorrichtung 10 nur betrieben wird, wenn die Wasserstanderfassungseinrichtung 19 einen Wasserstand des Unterwassers 3c in der Reinigungsvorrichtung 10 erfasst, der unter einen vorbestimmten Pegel abgesunken ist, da dies auf ein Verstopfen der Trenneinrichtung 12, bzw. des Zulaufs zu der Reinigungsvorrichtung 10 hindeutet. Hierbei kann der vorbestimmte Pegel des Wasserstands des Unterwassers 3c in der Reinigungsvorrichtung 10 auf der Grundlage des Wasserstands des Gewässers 3 vor der Reinigungsvorrichtung 10 festgelegt werden. Zur Erfassung dieses Wasserstands ist gegebenenfalls eine weitere Wasserstanderfassungseinrichtung zu montieren. Die Reinigungsvorrichtung 10 kann zudem über eine nicht dargestellte Wahleinrichtung, beispielsweise einen oder auch zwei verschiedene Taster usw., verfügen, mit denen der Betrieb der Reinigungsvorrichtung 10 zwischen einem Sommerbetrieb und einem Winterbetrieb umgeschaltet werden kann. Die zuvor beschriebene Einschaltung der Reinigungvorrichtung 10 entspricht dem Sommerbetrieb. Im Gegensatz dazu wird im Winterbetrieb zusätzlich zu der Auswertung des Signals der Wasserstanderfassungseinrichtung ein Signal einer Temperaturerfassungseinrichtung ausgewertet. Ergibt sich aus dem Signal der Temperaturerfassungseinrichtung, dass eine bestimmte, frei wählbare und einstellbare Temperatur erreicht oder unterschritten ist, kann die Förderschnecke 13 der Reinigungsvorrichtung 10 automatisch angetrieben werden, um eine Vereisung der Förderschnecke 13 zu verhindern.

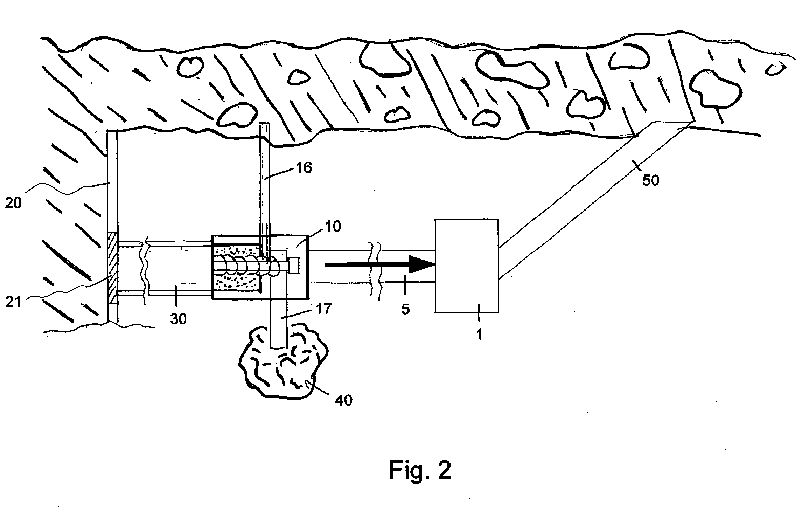

Fig. 2 zeigt in einer Draufsicht, wie die Reinigungsvorrichtung 10 in das Gelände bei einem Fließgewässer, wie beispielsweise einem Bach oder Fluss, eingebunden ist. Gleiche Teile in Fig. 1 und Fig. 2 sind mit den gleichen Bezugszeichen versehen.

Wie aus Fig. 2 ersichtlich, sind die technische Anlage 1 und die Reinigungsvorrichtung 10 an einer Seite des Gewässers 3 angeordnet. Darüber hinaus ist die Reinigungsvorrichtung 10 in Fließrichtung des Gewässers 3 vor der Zuführeinrichtung 5 der technischen Anlage 1 angeordnet. Zudem ist vor der Reinigungsvorrichtung 10 ein Wehr 20 vorhanden, welches quer zur Fließrichtung des Gewässers 3 in dem Gewässer 3 positioniert ist, Dadurch staut das Wehr 20 das Gewässer 3 vor der Reinigungsvorrichtung 10 auf und leitet es zudem an der Reinigungsvorrichtung 10 vorbei. In dem Wehr 20 befindet sich eine Absperrvorrichtung 21, welche je nach Bedarf geöffnet und geschlossen werden kann, um so die Zuflussmenge von Gewässer 3 zu der Reinigungsvorrichtung 10 zu regeln. Das durch die zumindest teilweise geöffnete Absperreinrichtung 21 fließende Gewässer 3 mit Schwemmgut 4 wird über eine Reinigungsvorrichtung-Zuführeinrichtung 30 der Reinigungsvorrichtung 10 zugeführt und dort, wie zuvor beschrieben, von dem Schwemmgut 4 gereinigt. Das aus dem Gewässer 4 herausgefilterte Schwemmgut 4 wird von der Schwemmgutaufnahmeeinrichtung 17 zu einem Schwemmgutablageplatz 40 neben der Reinigungsvorrichtung 10 befördert und dort abgelagert. Hierzu kann die Schwemmgutaufnahmeeinrichtung 17 beispielsweise als Rinne, deren Boden eine schiefe Ebene bildet, ausgeführt sein, die von der Reinigungsvorrichtung 10 in Richtung des Schwemmgutablageplatz 40 nach unten geneigt ist. Zudem werden Amphibien, die evtl. in die Reinigungsvorrichtung 10 geraten sind, von der Amphibienableiteinrichtung 16 wieder in das an der Reinigungsvorrichtung 10 vorbeigeführte Gewässer 3 zurückgeführt. Hierzu kann auch die Amphibienableiteinrichtung 16 beispielsweise als Rinne, deren Boden eine schiefe Ebene bildet, ausgeführt sein, die von der Reinigungsvorrichtung 10 in Richtung des an der Reinigungsvorrichtung 10 vorbeigeführten Gewässers 3 geneigt ist. Sobald das von der Reinigungsvorrichtung 10 gereinigte Unterwasser 3c über die Zuführeinrichtung 5 der technischen Anlage 1 zugeführt wurde und diese durchlaufen hat, wird das aus der technischen Anlage 1 ablaufende Wasser über eine Gewässer-Zuführeinrichtung 50 wieder in das an der Reinigungsvorrichtung 10 vorbeigeführte Gewässer 3 zurückgeführt.
Durch die zuvor beschriebene Bauweise kann die Reinigungsvorrichtung 10 kompakt gehalten werden, so dass sie auf geringem Raum installiert werden kann. Die Reinigungsvorrichtung 10 ist vorzugsweise unwesentlich breiter als die Zuführeinrichtung 5. Damit kann bewerkstelligt werden, dass nur gereinigtes Unterwasser 3c der technischen Anlage 1 als Wasser 2 zugeführt wird. Alternativ kann die Reinigungsvorrichtung 10 auch in die Zuführeinrichtung 5 eingesetzt sein. Mit diesen beiden Varianten der Reinigungsvorrichtung 10 ist nur ein geringer Eingriff in die Natur erforderlich.

### (Allgemeines)

Alle zuvor beschriebenen Ausgestaltungen der Reinigungsvorrichtung, der technischen Anlage und des Reinigungsverfahrens können einzeln oder in allen möglichen Kombinationen Verwendung finden. Hierbei sind insbesondere folgende Modifikationen denkbar.

Die Form der Trenneinrichtungsöffnungen 12a in der Trenneinrichtung 12 ist grundsätzlich beliebig. Daher können die Trenneinrichtungsöffnungen 12a alternativ zu der in Fig. 1 gezeigten Form eines Langlochs auch beispielsweise die Form eines Dreiecks, eines Quadrats, eines Vielecks, eines Sterns jeweils mit oder ohne abgerundeten Ecken, eines Kreises, einer Ellipse, usw. haben. Hierbei sind auch alle möglichen Kombinationen dieser und anderer denkbaren Formen realisierbar. Die Trenneinrichtung 12 ist insbesondere ein Sieb.

Darüber hinaus ist auch die Anzahl und Größe der Trenneinrichtungsöffnungen 12a beliebig, solange ein Reinigungseffekt des Gewässers 3 erzielt werden kann.

Es ist unter ökologischen Gesichtspunkten zum Schutz von Amphibien vorteilhaft, wenn die Trenneinrichtungsöffnungen 12a quer zur Förderrichtung der Förderschnecke 13 angeordnet sind, da Amphibien in der Regel höher als breit sind. Durch eine solche Anordnung der Trenneinrichtungsöffnungen 12a können Amphibien sicherer von der Förderschnecke 13 zurückgehalten werden. Zudem ergibt sich aus einer solchen Anordnung der Trenneinrichtungsöffnungen 12a der weitere Vorteil, dass der Wasserdurchtrittsquerschnitt durch die Trenneinrichtungsöffnungen 12a erhöht werden kann, ohne dass die mit der Reinigungsvorrichtung 10 erzielte Reinigungswirkung vermindert wird.

Weiterhin ist es zum Schutz von Amphibien vorgesehen, dass die Förderschnecke 13 zumindest abschnittsweise an deren der Trenneinrichtung zugewandten Begrenzung eine Schutzeinrichtung aufweist, welche verhindert, dass Tiere wie Amphibien oder kleine Fische teilweise durch die Trenneinrichtungsöffnungen 12a hindurchtreten und bei einer weiteren Bewegung der Förderschnecke 13 verletzt werden. Beispielsweise kann durch eine solche Schutzeinrichtung verhindert werden, dass beispielsweise bei Amphibien Gliedmaßen durch die Trenneinrichtungsöffnungen 12a hindurchtreten und infolgedessen abgeschnitten oder anders verletzt werden. Eine derartige Schutzeinrichtung ist in Form eines schmalen Schutzstreifens vorgesehen, der an der radial außenliegenden Begrenzung der Förderschnecke angeordnet ist. Dieser Schutzstreifen ist bevorzugt über mindestens die Hälfte der Förderschnecke, bevorzugt über mindestens drei Viertel der Länge des die Förderschnecke bildenden Leitblechs und besonders bevorzugt über die gesamte Förderstrecke umlaufend an der radial äußerer Begrenzung der Förderschnecke angeordnet. Eine solche Schutzeinrichtung steht bevorzugt weitgehend parallel zur Förderrichtung etwas über das die Förderschnecke bildende Leitblech über, so dass der direkte Kontakt von Lebewesen mit der Trenneinrichtung verhindert wird. Dementsprechend kann so auch verhindert werden, dass Tiere durch die Trenneinrichtungsöffnungen 12a hindurchtreten. Eine derartige Schutzeinrichtung steht bevorzugt weniger als 100 mm, bevorzugt weniger als 50 mm, besonders bevorzugt weniger als 25 mm in Förderrichtung über das die Förderschnecke bildende Leitblech über. Bevorzugt steht der Schutzstreifen zumindest Abschnittsweise wenigstens 5 mm, bevorzugt wenigstens 10 mm an der radial außenliegenden Begrenzung der Förderschnecke in Förderrichtung über das die Förderschnecke bildenden Leitblech hinaus. In einer bevorzugten Ausführungsform verjüngt sich die Schutzeinrichtung bzw. der Schutzstreifen in der in Förderrichtung 2. Hälfte, bevorzugt im 3. Drittel, besonders bevorzugt im 4. Viertel der Förderschnecke. Durch diese Verjüngung ist es möglich, dass Tiere, wie z.B. Amphibien ohne großes Verletzungsrisiko gefördert und in die Amphibienableiteinrichtung überführt werden können. Eine derartige Schutzeinrichtung bietet eine wesentliche Verbesserung des ökologischen Zustandes eines Gewässers, deren Energiegewinnungseinrichtungen mit einer solchen Reinigungsvorrichtung ausgerüstet sind. Insbesondere bietet eine derartige Reinigungsvorrichtung Vorteile in Bezug auf die biologische Durchgängigkeit, die Feststoffbewirtschaftung und in einigen Fällen auch auf die Uferstruktur. Da durch eine derartige Schutzeinrichtung abschnittsweise der Wasserauslauf durch die Trenneinrichtungsöffnungen erschwert oder sogar verhindert wird, kann in dem die Förderschnecke bildenden Leitblech eine Perforierung vorgesehen sein. Durch die Löcher der Perforierung im Leitblech, kann Wasser, jedoch keine größeren Feststoffe und keine Amphibien hindurchtreten. So werden sowohl Schwemmgut als auch Tiere mittels der Schnecke weiter in Förderrichtung transportiert, wohingegen Wasser entgegen der Förderrichtung abläuft und unterhalb des perforierten Leitblechs aufgrund der schrägen Anordnung der Förderschnecke durch die Öffnungen in der Trenneinrichtung aus dem Inneren der Förderschnecke abfließen kann.

Größe und/oder Form der Trenneinrichtungsöffnungen 12a sind je nach im Gewässer anfallendem Schwemmgut 4 zu wählen, um das Schwemmgut 4 sicher mit der Trenneinrichtung 12 aus dem Gewässer 3 zu trennen. Hierzu kann die Trenneinrichtung 12 austauschbar sein. Gegebenenfalls kann auch eine zweite oder noch mehr Trenneinrichtung(en), welche(s) kleinere Öffnungen aufweist(aufweisen), neben die Trenneinrichtung 12 montiert werden, und zwar vorzugsweise auf der der Förderschnecke 13 abgewandten Seite der Trenneinrichtung 12, um den Abstand zwischen Trenneinrichtung 12 und Förderschnecke 13 nicht zu verändern. Zudem können die Trenneinrichtungsöffnungen 12a selbst verstellbar sein.

Die Trenneinrichtung 12 hat vorzugsweise die Form eines Halbkreisbogens bzw. einer Halbzylinderwand mit einem Radius geringfügig größer als der Außenradius der Förderschnecke 13, so dass sich die Förderschnecke 13 um ihre Achse drehen kann und an der Trenneinrichtung 12 abgelagertes Schwemmgut 4 aus dem Gewässer 3 fördern kann, wenn die Reinigungsvorrichtung 10 wie zuvor beschrieben in einem Gewässer 3 montiert ist.

Vorzugsweise ist der Abstand zwischen Trenneinrichtung 12 und Förderschnecke 13 kleiner als 1 mm. Je nach Größe der Reinigungsvorrichtung 10 bzw. der Trenneinrichtung 12 und der Förderschnecke 13 ist jedoch auch ein Abstand von 2 - 3 mm ausreichend. Aufgrund dessen kann die Reinigungsvorrichtung 10 bzw. das Reinigungsverfahren, wenn auch die Trenneinrichtungsöffnungen 12a nicht größer als der Abstand zwischen Trenneinrichtung 12 und Förderschnecke 13 eingestellt sind, Schwemmgut 4 mit einer Partikelgröße aus dem Gewässer 3 beseitigen, die größer als der Abstand zwischen Trenneinrichtung 12 und Förderschnecke 13 bzw. in etwa größer 1 mm ist. Für Laub, Äste usw. ist es jedoch ausreichend, wenn die Trenneinrichtungsöffnungen 12a größer als der Abstand zwischen Trenneinrichtung 12 und Förderschnecke 13 ist.

Die Trenneinrichtung kann ein (halb)rundgebogenes Blech sein. Hierdurch ist die Trenneinrichtungsfläche auf einen halben Umkreis (½ * 2π) der Förderschnecke 13 vergrößert. Dadurch kann die Bauweise der Reinigungsvorrichtung 10 kompakt gehalten werden, so dass sie auf geringem Raum installiert werden kann.

Der Neigungswinkel der Förderschnecke 13 und damit auch der Trenneinrichtung 12 beträgt vorzugsweise 30° bis 60°.

Die Förderschnecke 13 kann an ihren Schneckenflügeln mit einer Schneide oder einem Steg versehen sein, um das an der Trenneinrichtung 12 abgelagerte Schwemmgut 4 besser zu transportieren, oder um beispielsweise in die Trenneinrichtung 12 eingedrungene kleine Äste abzuscheren. Größeres Schwemmgut 4, wie beispielsweise größere Äste, wird von der Förderschnecke 13 nach oben und zur Seite gefördert.

Zudem kann die Förderschnecke 13 unter ihren Schneckenflügel mit nicht dargestellten Eisbrechern versehen sein, um die Reinigungsvorrichtung 10 noch besser von Sulzeis oder Vereisung zu befreien bzw. freizuhalten.

Die Förderschnecke 13 kann in ihren Schneckenwindungen bzw. Schneckenflügeln mit Schlitzen zum Ablauf von Wasser versehen sein.

Die Anzahl der Windungen der Förderschnecke 13 wird vorzugsweise abhängig von den Anforderungen an die technische Anlage 1 gewählt, das heißt, abhängig von der Reinheit, mit welcher der technischen Anlage 1 Wasser zuzuführen ist.

Die Trenneinrichtung 12 und/oder die Förderschnecke 13 können aus Edelstahl gefertigt sein. Gleiches gilt auch für das Gestell 11. Das Gestell 11 könnte zumindest am Boden und den Seitenwänden auch aus einer wasserdichten Wanne gefertigt sein, aus welcher die Zuführeinrichtung 5 oder ein Stutzen für die Zuführeinrichtung 5 führt. Zudem könnte das Gestell 11 eine Einrichtung aufweisen, mit welcher das Gestell 11, beispielsweise für Reinigungszwecke, geleert werden kann.

Die Form des Gestells 11 ist grundsätzlich beliebig, solange gewährleistet ist, dass die Trenneinrichtung 12 und die Förderschnecke 13 in dem Gewässer 3 in Gewässerströmungsrichtung schräg nach oben ansteigend angeordnet sind und die zuvor beschriebene Funktion der Reinigungsvorrichtung 10 gegeben ist.

Die Trenneinrichtung 12 kann nicht nur als Platte mit Öffnungen, beispielsweise ein Lochblech ausgeführt sein, sondern auch als ein Sieb aus sich überkreuzenden Drähten, beispielsweise aus Edelstahl, gefertigt sein. Das aus Drähten gefertigte Sieb kann auch in einem Rahmen aus beispielsweise Edelstahl befestigt sein.

Für die vorangehend beschriebenen Komponenten der Reinigungseinrichtung kann nicht nur Edelstahl sondern auch ein sonstiges gegen Umwelteinflüsse widerstandsfähiges Material oder Materialien, welche(s) keine Umweltverschmutzung verursacht(verursachen), einsetzbar sein.

Es ist vorteilhaft, wenn die Antriebseinrichtung 18 die Förderschnecke 13 langsam antreiben und drehen kann. Unter langsam ist hierbei eine Umdrehungsgeschwindigkeit von bis zu 10 Umdrehungen pro Minute zu verstehen.

Der elektrische Schaltkasten 18c kann einen Überlastschutz enthalten, bei welchem die Antriebseinrichtung 18 abgeschaltet wird, wenn zu große Kräfte erforderlich sind, um die Förderschnecke zu drehen. Zudem kann die Antriebseinrichtung 18 die Förderschnecke 13 im Uhrzeigersinn oder gegen den Uhrzeigersinn drehen. Das heißt, die Antriebseinrichtung 18 ist hinsichtlich der Drehrichtung umschaltbar.

Zur weiteren Verbesserung der Reinigungswirkung der Reinigungsvorrichtung 10 kann der Lagerbock 15 auch als Becken ausgeführt sein, in welches das Gewässer 3 zunächst zur Vorfilterung eingeführt wird. In diesem Fall liegt die Oberkante des Beckens relativ zu der Wasserlinie 3a so, dass das Becken als Vorfilter fungiert. Insbesondere kann der Lagerbock 15 als Sandabscheider ausgeführt sein, welcher aus dem Gewässer 3 Sand abscheidet, um das Unterwasser 3c bzw. das der technischen Anlage 1 zugeführte Wasser 2 auch von Sand zurfeinigen.

Die Länge der Zuführeinrichtung 5, der Reinigungsvorrichtung-Zuführeinrichtung 30, und der Gewässer-Zuführeinrichtung 50 ist frei wählbar und abhängig von den örtlichen Verhältnissen, in welchen das Gewässer 3, die Reinigungsvorrichtung 10 und die technische Anlage 1 zueinander angeordnet sind.

### Bezugszeichenliste

- 1: technische Anlage
- 2: Wasser
- 3: natürliches Gewässer
- 3a: Wasserlinie
- 3b: Oberwasser
- 3c: Unterwasser
- 4: Schwemmgut
- 5: Zuführeinrichtung
- 10: Reinigungsvorrichtung
- 11: Gestell
- 11a: Öffnung
- 12: Trenneinrichtung
- 12a: Trenneinrichtungsöffnungen
- 13: Förderschnecke
- 13a: Förderschneckenachse
- 13b: Förderschneckenauslauf
- 14: Lager
- 15: Lagerbock
- 16: Amphibienableiteinrichtung
- 17: Schwemmgutaufnahmeeinrichtung
- 18: Antriebseinrichtung
- 18a: Motor
- 18b: Motorbock
- 18c: Schaltkasten
- 19: Wasserstanderfassungseinrichtung
- 20: Wehr
- 21: Absperrvorrichtung
- 30: Reinigungsvorrichtung-Zuführeinrichtung
- 40: Schwemmgutablageplatz
- 50: Gewässer-Zuführeinrichtung

## Patentansprüche

1. Reinigungsvorrichtung (10) zur Reinigung von Gewässern (3) von Schwemmgut (4), mit einer Trenneinrichtung (12) zum Trennen von Schwemmgut (4) und Wasser (2) des Gewässers (3), und einer Förderschnecke (13) zum Fördern von an der Trenneinrichtung (12) abgelagertem Schwemmgut (4) aus dem Gewässer (3) **dadurch gekennzeichnet, dass**
die Reinigungsvorrichtung zudem eine Amphibienableiteinrichtung (16) zum Ableiten von mit der Förderschnecke (13) aus dem Gewässer (3) geförderten Tieren zurück in das Gewässer (3) aufweist und die Förderschnecke (13) zumindest abschnittsweise an deren der Trenneinrichtung zugewandten Begrenzung eine Schutzeinrichtung aufweist, weiche ein schmaler Schutzstreifen ist, der an der radial außenliegenden Begrenzung der Förderschnecke angeordnet ist und verhindert, dass Tiere wie Amphibien oder kleine Fische teilweise durch die Trenneinrichtungsöffnungen (12a) hindurchtreten.

2. Reinigungsvorrichtung nach Anspruch 1, zudem mit einem Gestell (11), an welchem die Förderschnecke (13) gelagert ist, wobei die Trenneinrichtung (12) zwischen Gestell (11) und Förderschnecke (13) angeordnet ist.

3. Reinigungsvorrichtung nach Anspruch 2, wobei die Trenneinrichtung (12) mit Trenneinrichtungsöffnungen (12a) versehen ist und das Gestell (11) die Trenneinrichtung (12) als einen Wassereinlauf aufweist und zudem eine Öffnung (11a) als einen Wasserauslauf aus dem Gestell (11) der Reinigungsvorrichtung (10) hat, wobei die Öffnung (11a) für den Wasserauslauf der Summe der Trenneinrichtungsöffnungen (12a) entspricht.

4. Reinigungsvorrichtung nach einem der vorangehenden Ansprüche, zudem mit einer Lagereinrichtung (14, 15) zur Lagerung der Förderschnecke (13) an dem Gestell (11) und/oder zum Abscheiden von Sand aus dem Gewässer (3).

5. Reinigungsvorrichtung nach einem der vorangehenden Ansprüche, wobei die Trenneinrichtung (12) zumindest teilweise um die Förderschnecke (13) gebogen ist.

6. Reinigungsvorrichtung nach einem der vorangehenden Ansprüche, zudem mit einer Schwemmgutaufnahmeeinrichtung (17) zur Aufnahme von aus dem Gewässer (3) gefördertem Schwemmgut (4) und/oder einer Antriebseinrichtung (18) zum Antrieb der Förderschnecke (13) in eine Drehbewegung.

7. Reinigungsvorrichtung nach einem der vorangehenden Ansprüche, wobei die Förderschnecke (13) an der Unterseite ihrer Schneckenflügel mit Eisbrechern versehen ist.

8. Reinigungsvorrichtung nach einem der vorangehenden Ansprüche,
**dadurch gekennzeichnet, dass**
die Schutzeinrichtung weitgehend parallel zur Förderrichtung über das die Förderschnecke bildende Leitblech übersteht, so dass der direkte Kontakt von Lebewesen mit der Trenneinrichtung verhindert wird.

9. Reinigungsvorrichtung nach einem der vorangehenden Ansprüche,
**dadurch gekennzeichnet, dass**
sich die Schutzeinrichtung bzw. der Schutzstreifen in Förderrichtung in der 2. Hälfte, bevorzugt im 3. Drittel, besonders bevorzugt im 4. Viertel der Förderschnecke verjüngt, um zu ermöglichen, dass Tiere, wie z.B. Amphibien ohne großes Verletzungsrisiko gefördert und in die Amphibienableiteinrichtung überführt werden können.

10. Technische Anlage (1) zur Verwendung von Wasser (2) aus einem natürlichen Gewässer (3), mit
einer Reinigungsvorrichtung (10) nach einem der vorstehenden Ansprüche.

11. Reinigungsverfahren zum Reinigen von Gewässer (3) von Schwemmgut (4), mit den Schritten
- Trennen von Schwemmgut (4) und Wasser (2) des Gewässers (3) mittels einer Trenneinrichtung (12),
- Fördern von an der Trenneinrichtung (12) abgelagertem Schwemmgut (4) aus dem Gewässer (3) mittels einer Förderschnecke (13) und
- Ableiten von mit der Förderschnecke (13) aus dem Gewässer (3) geförderten Tieren mittels einer Amphibienableiteinrichtung (16) zurück in das Gewässer (3),
**dadurch gekennzeichnet, dass** das Fördern von an der Trenneinrichtung (12) abgelagertem Schwemmgut (4) aus dem Gewässer (3) mittels einer Förderschnecke (13) erfolgt, die zumindest abschnittsweise an deren der Trenneinrichtung zugewandten Begrenzung eine Schutzeinrichtung aufweist, welche ein schmaler Schutzstreifen ist, der an der radial außenliegenden Begrenzung der Förderschnecke angeordnet ist und verhindert, dass Tiere wie Amphibien oder kleine Fische teilweise durch die Trenneinrichtungsöffnungen (12a) hindurchtreten.

## Claims

1. Cleaning device (10) for cleaning floating material (4) from bodies of water (3), comprising a separating device (12) for separating floating material (4) and water (2) from the body of water (3), and a screw conveyor (13) by which floating material (4) deposited on the separating device (12) is conveyed out of the body of water (3),
**characterised in that**
the cleaning device also has an amphibian diverting unit (16) for diverting animals conveyed out of the body of water (3) by the screw conveyor (13) and back into the body of water (3), and the screw conveyor (13) has a protective arrangement, which is a narrow protective strip, at least in some sections on its boundary facing the separating device, said protective strip being arranged on the radially outer boundary of the screw conveyor and preventing animals such as amphibians or small fishes from passing partially through the separating device openings (12a).

2. Cleaning device according to claim 1, also with a base frame (11), on which the screw conveyor (13) is mounted, wherein the separating device (12) is arranged between the frame (11) and the screw conveyor (13).

3. Cleaning device according to claim 2, wherein the separating device (12) is provided with separating device openings (12a) and the base frame (11) has the separating device (12) as a water inlet and also has an opening (11 a) as a water outlet out of the base frame (11) of the cleaning device (10), wherein the opening (11 a) for the water outlet corresponds to the sum of the separating device openings (12a).

4. Cleaning device according to one of the preceding claims, also having a supporting arrangement (14, 15) for mounting the screw conveyor (13) on the base frame (11) and/or for removing sand from the body of water (3).

5. Cleaning device according to one of the preceding claims, wherein the separating device (12) is curved at least partially around the screw conveyor (13).

6. Cleaning device according to one of the preceding claims, also having a floating material receiving unit (17) for receiving floating material (4) conveyed out of the body of water (3) and/or a drive unit (18) for driving the screw conveyor (3) in a rotary motion.

7. Cleaning device according to one of the preceding claims, wherein the screw conveyor (13) is provided with ice breakers on the underside of its screw blades.

8. Cleaning device according to one of the preceding claims, **characterised in that**
the protective arrangement projects substantially parallel to the conveying direction over the baffle plate forming the conveyor screw, so that direct contact by living creatures with the separating device is prevented.

9. Cleaning device according to one of the preceding claims, **characterised in that**
the protective device or the protective strip is tapered in the conveying direction in the 2nd half, preferably in the 3rd third, particularly preferably in the 4th quarter of the conveyor screw, in order to make it possible for animals, such as for example amphibians, to be conveyed without major risk of injury and to be transferred into the amphibian diverting unit.

10. Technical apparatus (1) for using water (2) from a natural body of water (3), with
a cleaning device (10) according to one of the preceding claims.

11. Cleaning process for cleaning bodies of water (3) of floating material (4), comprising the steps of
- separating floating material (4) and water (2) from the body of water (3) by means of a separating device (12),
- conveying floating material (4) deposited on the separating device (12) out of the body of water (3) by means of a screw conveyor (13) and
- diverting animals conveyed by the screw conveyor (13) out of the body of water (3) by means of an amphibian diverting unit (16) back into the body of water (3),
**characterised in that** the conveying of floating material (4) deposited on the separating device (12) out of the body of water (3) takes place by means of a screw conveyor (13), having a protective arrangement, which is a narrow protective strip, at least in some sections on its boundary facing the separating device, said protective strip being arranged on the radially outer limit of the screw conveyor and preventing animals such as amphibians or small fishes from passing partially through the separating device openings (12a).

## Revendications

1. Dispositif de nettoyage (10) destiné à nettoyer des étendues d'eau (3) pour les débarrasser de matériaux flottants (4), comprenant un système de séparation (12) destiné à séparer les matériaux flottants (4) et l'eau (2) de l'étendue d'eau (3), et un convoyeur à vis (13) destiné à transporter des matériaux flottants (4) déposés sur le système de séparation (12) hors de l'étendue d'eau (3),
**caractérisé en ce que**
le dispositif de nettoyage comprend en outre un système d'évacuation amphibie (16) destiné à ramener les animaux transportés hors de l'étendue d'eau (3) au moyen du convoyeur à vis (13) dans l'étendue d'eau (3) et le convoyeur à vis (13) comprend au moins en partie sur sa délimitation tournée vers le système de séparation un système de protection, lequel est une bande de protection étroite qui est agencée sur la délimitation radialement extérieure du convoyeur à vis et empêche que des animaux tels que des amphibiens ou des petits poissons passent en partie par les ouvertures (12a) du système de séparation.

2. Dispositif de nettoyage selon la revendication 1, comprenant en outre un châssis (11) sur lequel le convoyeur à vis (13) est monté, dans lequel le système de séparation (12) est agencé entre le châssis (11) et le convoyeur à vis (13).

3. Dispositif de nettoyage selon la revendication 2, dans lequel le système de séparation (12) est pourvu d'ouvertures de système de séparation (12a) et le châssis (11) comprend le système de séparation (12) en tant qu'arrivée d'eau et présente en outre une ouverture (11a) en tant que sortie d'eau à l'extérieur du châssis (11) du dispositif de nettoyage (10), dans lequel l'ouverture (11 a) pour la sortie d'eau correspond à la somme des ouvertures (12a) du système de séparation.

4. Dispositif de nettoyage selon l'une quelconque des revendications précédentes, comprenant en outre un système de support (14, 15) pour le support du convoyeur à vis (13) sur le châssis (11) et/ou pour le dépôt du sable provenant de l'étendue d'eau (3).

5. Dispositif de nettoyage selon l'une quelconque des revendications précédentes, dans lequel le système de séparation (12) est fléchi au moins en partie autour du convoyeur à vis (13).

6. Dispositif de nettoyage selon l'une quelconque des revendications précédentes, comprenant en outre un système de réception de matériaux flottants (17) destiné à recevoir les matériaux flottants (4) transportés hors de l'étendue d'eau (3) et/ou un système d'entraînement (18) destiné à entraîner le convoyeur à vis (13) dans un mouvement rotatif.

7. Dispositif de nettoyage selon l'une quelconque des revendications précédentes, dans lequel le convoyeur à vis (13) est pourvu sur la face inférieure de ses palettes hélicoïdales de brise-glace.

8. Dispositif de nettoyage selon l'une quelconque des revendications précédentes,
**caractérisé en ce que**
le système de protection fait saillie, en grande partie parallèlement au sens de transport, à la tôle de guidage formant le convoyeur à vis, de sorte qu'un contact direct entre un être vivant et le système de séparation est empêché.

9. Dispositif de nettoyage selon l'une quelconque des revendications précédentes,
**caractérisé en ce que**
le système de protection ou la bande de protection s'amincit dans le sens de transport dans la deuxième moitié, de préférence dans le troisième tiers, de manière particulièrement préférée dans le quatrième quart du convoyeur à vis, afin de permettre que des animaux, tels que par exemple des amphibiens, puissent être transportés sans trop risquer d'être blessés et transférés dans le système d'évacuation amphibie.

10. Installation technique (1) pour l'utilisation d'une eau (2) provenant d'une étendue d'eau naturelle (3), comprenant
un dispositif de nettoyage (10) selon l'une quelconque des revendications précédentes.

11. Procédé de nettoyage permettant de nettoyer une étendue d'eau (3) pour la débarrasser de matériaux flottants (4), comprenant les étapes de
- séparation des matériaux flottants (4) et de l'eau (2) de l'étendue d'eau (3) au moyen d'un système de séparation (12),
- transport des matériaux flottants (4) déposés sur le système de séparation (12) hors de l'étendue d'eau (3) au moyen d'un convoyeur à vis (13) et
- retour dans l'étendue d'eau (3), au moyen d'un système d'évacuation amphibie (16), des animaux transportés hors de l'étendue d'eau (3) à l'aide du convoyeur à vis (13),
**caractérisé en ce que** le transport de matériaux flottants (4) déposés sur le système de séparation (12) hors de l'étendue d'eau (3) s'effectue au moyen d'un convoyeur à vis (13), qui comprend au moins en partie, sur sa délimitation tournée vers le système de séparation, un système de protection, lequel est une bande de protection étroite qui est agencée sur la délimitation radialement extérieure du convoyeur à vis et empêche que des animaux tels que des amphibiens ou de petits poissons passent en partie par les ouvertures (12a) du système de séparation.
